# EUROPEAN PATENT APPLICATION

(11) **EP 4 796 199 A1**
(43) Date of publication of application: **26.08.2026**
(21) Application number: 25226017.9
(22) Date of filing: 19.12.2025
(51) Int. Cl.: B01D 45/08, B01D 47/02, B01D 50/40

(54) **SYSTEM TO REMOVE FOOD PARTICLES FROM AIR STREAM**

(30) Priority: 25.02.2025 US 202563763061 P
(71) Applicant: MP Equipment, LLC, Gainesville, GA 30504 (US)
(72) Inventor: MARTINEZ, Octavio, Gainesville (US)
(74) Representative: Mathys & Squire

(57) **Abstract**

A system to remove particulates from an air stream includes a housing containing a capture solution and an air mover coupled to the housing. The air mover is configured to pull an air stream through the housing. The housing is configured to direct an incoming portion of the air stream below a surface level of the capture solution for transfer of particulates in the air stream to the capture solution and to direct a scrubbed portion of the air stream substantially free of particulates out of the capture solution for discharge from the housing.

## Description

### CROSS-REFERENCE TO RELATED APPLICATIONS

This application claims priority from United States Provisional Application No. 63/763,061, filed on February 25, 2025, the entirety of which is hereby incorporated by reference herein.

### BACKGROUND OF THE INVENTION

This application relates to systems for removing particulates from air, such as food particles generated during commercial food preparation processes. Over time, air quality within a food processing facility can deteriorate as food particles disperse into the air. The subject specification relates to systems to capture air streams containing the dispersed food particles and scrub the particles from the air for recirculation.

### SUMMARY OF THE INVENTION

A representative embodiment of the disclosure is provided.

The embodiment includes a system to remove particulates, such as food particles, from an air stream. The system includes a housing containing a capture solution and an air mover coupled to the housing. The air mover is configured to pull an air stream through the housing. The housing is configured to direct an incoming portion of the air stream below a surface level of the capture solution for transfer of particulates in the air stream to the capture solution and to direct a scrubbed portion of the air stream substantially free of particulates out of the capture solution for discharge from the housing.

Further representative embodiments include the Numbered Paragraphs provided at the end of the specification and various combinations of those Numbered Paragraphs as discussed therein.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a front perspective view of a system to remove particulates from an air stream according to an exemplary embodiment of the present disclosure showing an air stream with particulate entering the system, the system directing the air stream to pass below a level of a capture solution to scrub the particulate from the air stream, and scrubbed air leaving the system for recirculation.
FIG. 2 is a rear perspective view of the system of FIG. 1.
FIG. 3 is perspective cross-sectional view of the system taken along line 3-3 in FIG. 2 showing internal structures of the system for directing the air stream through the capture solution for collection and disposal of the captured particulate.
FIG. 4 is a rear cross-sectional view of the section 3-3 showing an exemplary flow of the air stream through the system.
FIG. 5 is an enlarged view of FIG. 4.
FIG. 6 is another perspective view of system of FIG. 1 showing solution inlet and waste discharge devices of the system.
FIG. 7 is a schematic view of a food preparation system.

### DETAILED DESCRIPTION OF THE INVENTION

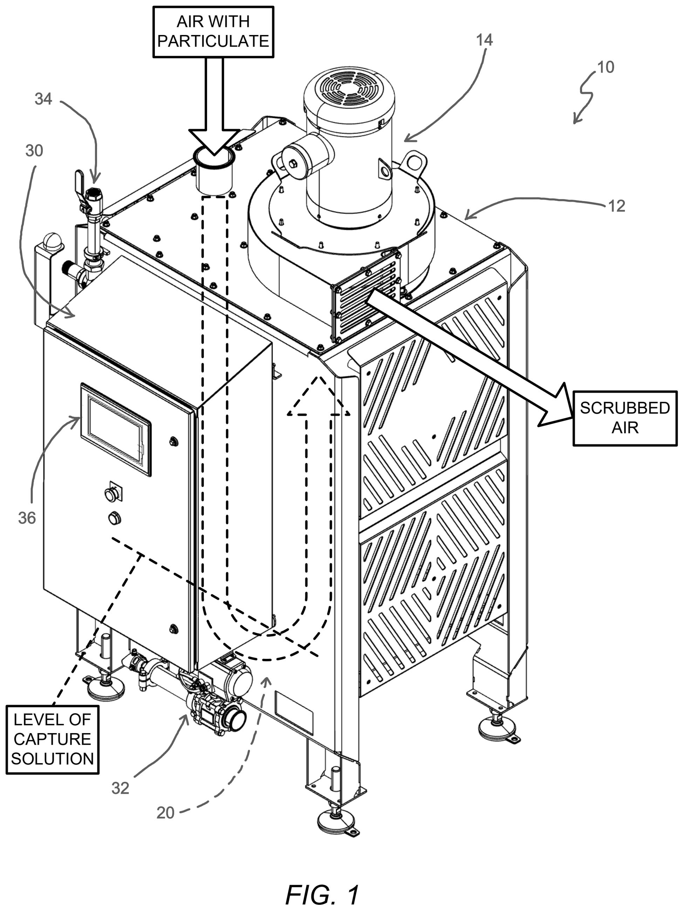

Turning now to FIGS. 1-7, an exemplary system 10 to remove (scrub) particulates from an air stream is provided. For example, in various commercial food preparation processes, such as mass preparation of breaded food items, particulates, such as breading ingredients or other food particles, disperse into the air of the facility. The system 10 of the present disclosure is configured to receive a stream of air that contains undesirable particulates (such as from a hood connected to a food preparation apparatus, or from an environment within the food preparation facility that is outside of but proximate to a food preparation apparatus), scrub the air stream of the particulate matter, and discharge scrubbed air for recirculation. In the illustrative embodiment, the stream of air with particulates enters the system 10, is directed below a surface level of a capture solution 20 configured to bind with particulate matter to remove (scrub) the particulate matter from the air stream, and the scrubbed air stream flows out of the system 10 substantially free from particulates, such as for recirculation within a food preparation facility. Management of airborne particulates is a significant factor in air quality control.

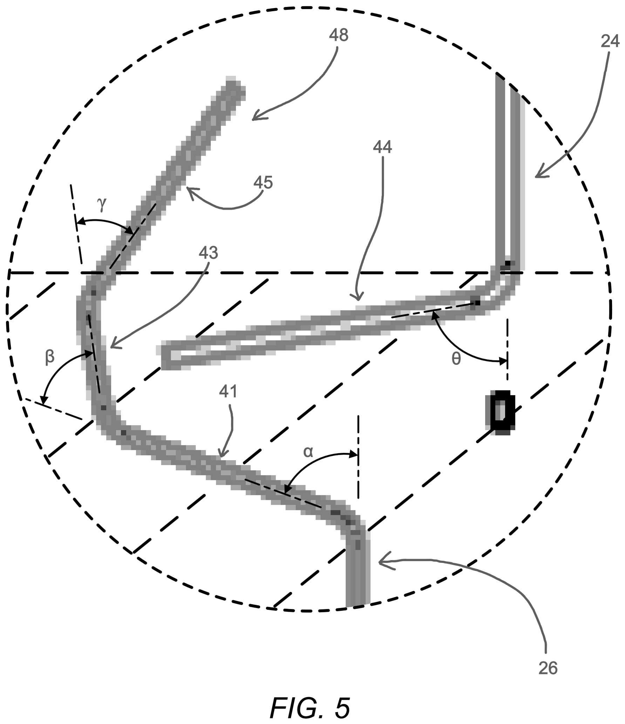

As shown in Fig. 1, the system 10 includes a housing 12, containing a capture solution 20, and an air mover 14, such as a rotary blower or fan, coupled to the housing 12 to pull an air stream through the housing 12 for scrubbing and discharge from the housing 12. Particulate matter scrubbed from the air stream is retained in the capture solution 20. In the illustrative embodiment, the particulate matter in the capture solution is directed to a waste discharge device 32 (see also FIG. 5) for removal from the housing 12. A solution inlet device 34 dispenses capture solution 20 into the housing 12 to maintain a desired surface level of the capture solution 20 within the housing 12.

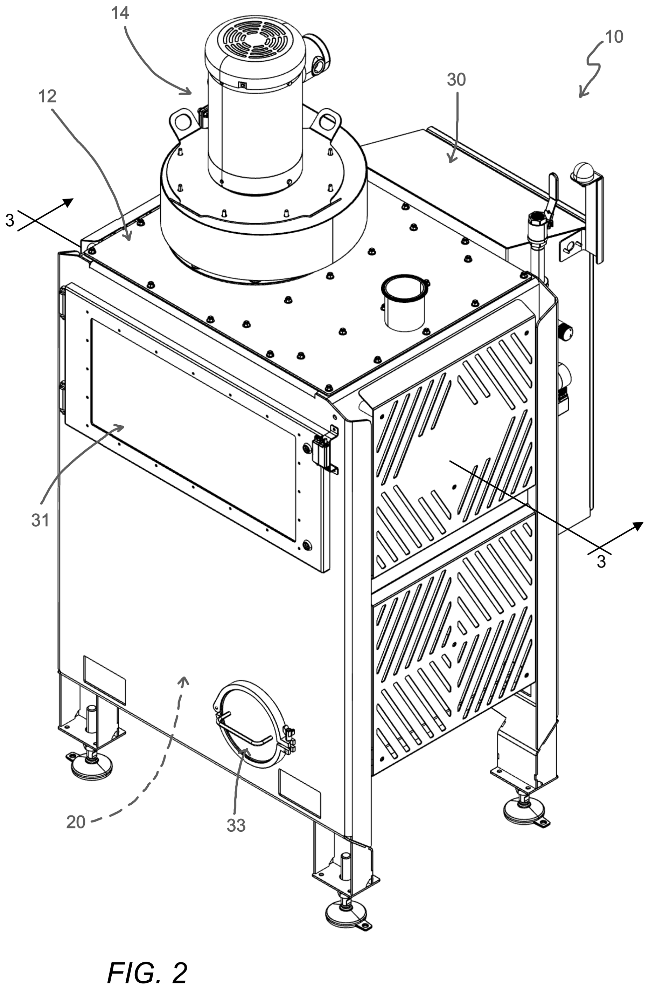

In some embodiments, a controller 30 is configured to automate operation of the system 10, including periodic removal of capture solution soiled with particulate matter through the waste discharge device 32 and management of the surface level of the capture solution 20 in the housing 12 through operation of the solution inlet device 34. In some embodiments, one or more sensors are coupled to the housing 12 configured to provide signals to the controller 30 indicating, for example, an actual surface level of the capture solution 20 in the housing 12 for comparison to a desired surface level or an amount of particulate matter suspended in the capture solution 20, among other relevant parameters relevant to operation of the system 10. In some embodiments, a pressure sensor of the waste discharge device 32 is configured to provide a signal to the controller indicating the surface level of the capture solution 20 within the housing 12, or providing an indication of a concentration of particulate matter that is entrained within the capture solution. A user interface 36 of the controller 30 allows an operator to adjust operation of the system 10. In some embodiments, one or more hatches 37, 38 (FIG. 2) allow access into the housing 12 for cleaning and maintenance and/or visual inspection through the hatch. Seal elements 39, such as gaskets, can be arranged at rearward edges of the first and third walls 24, 28 to form a seal with the closed hatch 37.

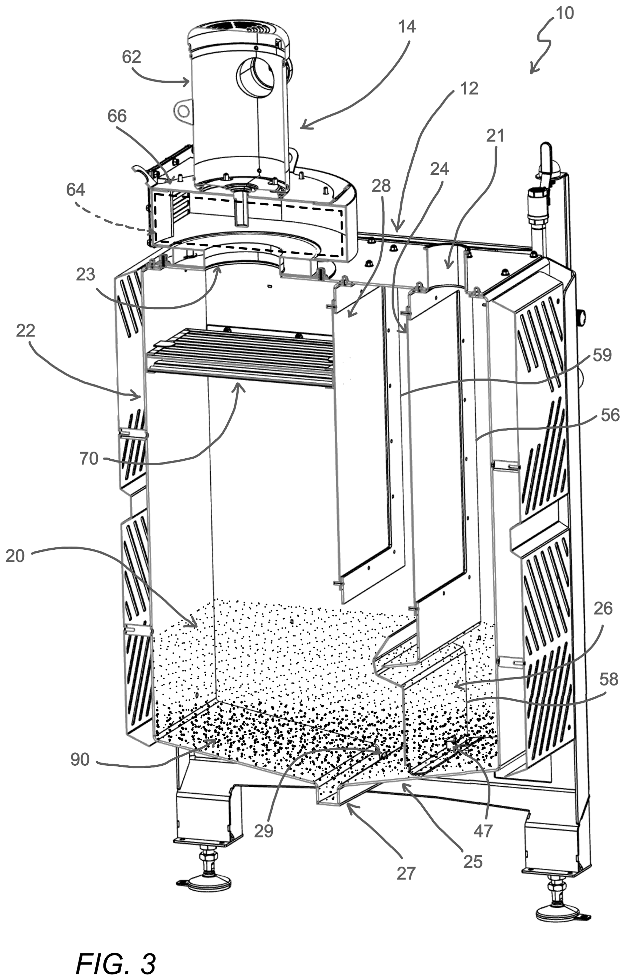

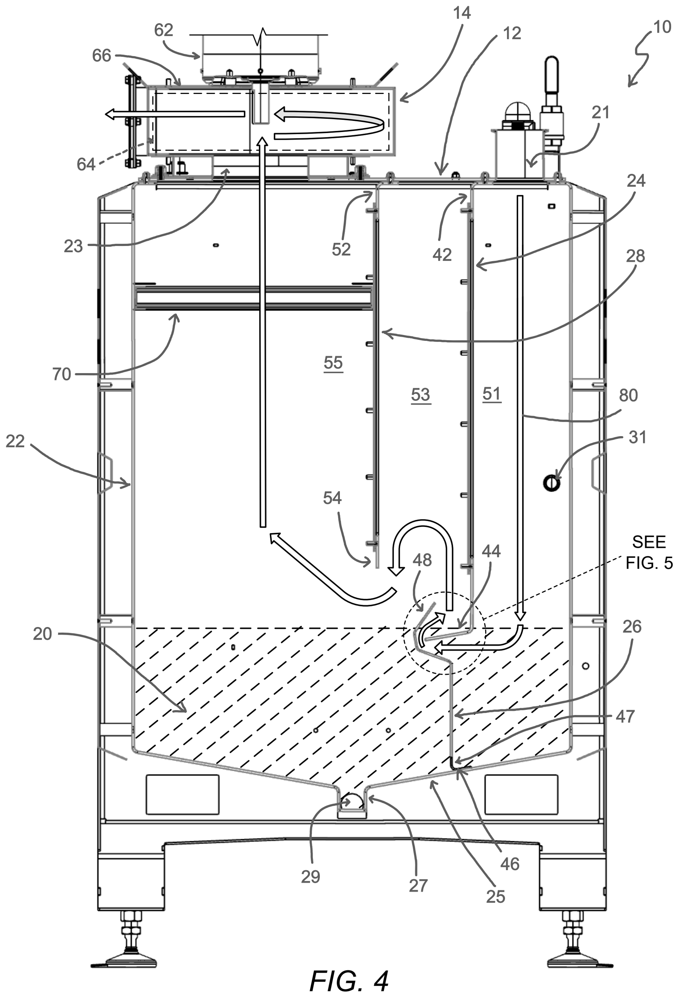

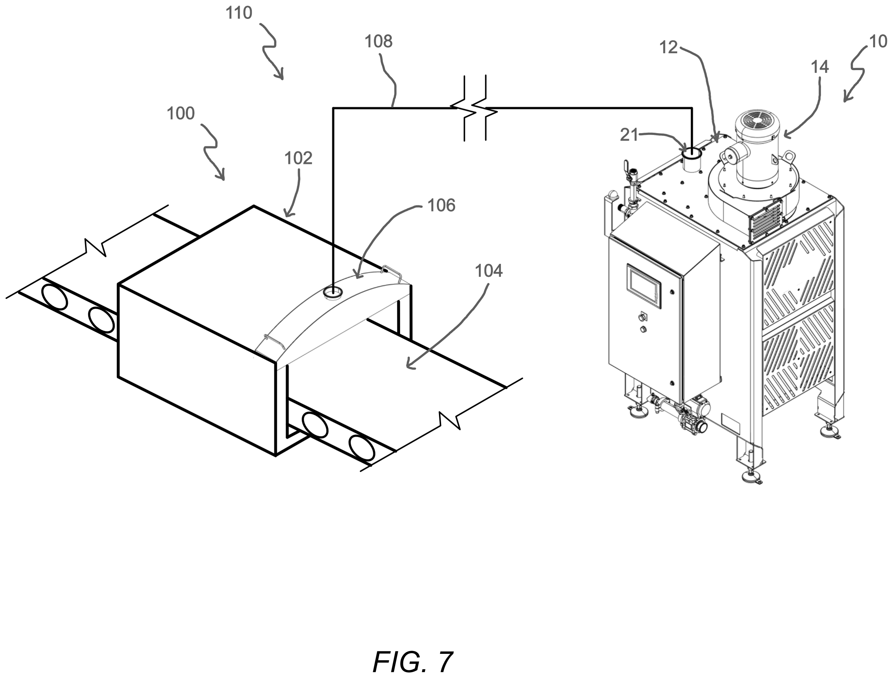

As shown in FIGS. 3 and 4, the housing 12 includes a container 22 and a plurality of walls 24, 26, 28 extending across an interior of the container (e.g., from a front of the container 22 to a rear of the container 22). An inlet 21 arranged at an upper end of the container 22 allows entry of the air stream into the system 10. For example, in an illustrative food preparation system 110 (FIG. 7), the inlet 21 of the system 10 could be connected to a food preparation apparatus 100. The exemplary food preparation apparatus 100 includes a food processing station 102, a conveyor 104 to move food items through the food processing station 102, and a hood 106 arranged at an exit of the food processing station 102 to collect particulate matter dispersed during a food preparation process. Piping or tubing 108 connects the hood 106 to the inlet 21 of the system 10 to remove particulates in the air stream pulled through the hood 106. In some embodiments, the food preparation apparatus 100 is a food breading apparatus configured to apply breading to items of food, such as by coating the food items in a binder and applying flour and/or other breading ingredients to the food items.

Returning to FIGS. 3 and 4, The air mover 14 is coupled to an outlet 23 of the container 22 and configured to produce a negative pressure within the container 22 to pull the air stream through the inlet 21. The air mover 14 is further configured to discharge scrubbed air received though the outlet 23. In the illustrative embodiment, the air mover 14 includes a motor 62, a propeller 64 coupled to the motor 62, and a shroud 66 arranged around the propeller 64. The motor 62 turns the propeller 64 to pull air in the container 22 through the outlet 23 into the shroud 66 and forces the air to discharge through a side of the shroud 66.

The walls 24, 26, 28 are arranged between the inlet 21 and outlet 23 of the container 22. An upper end 42 of the first wall 24 is coupled to an upper end of the container 22 adjacent to the inlet 21, and a lower end 44 of the first wall 24 extends below the surface level of the capture solution 20. The second wall 26 is arranged between the first wall 24 and the outlet 23, with a lower end 46 of the second wall 26 coupled to a lower end of the container 22 and an upper end 48 of the second wall 26 extending above the surface level of the capture solution 20. The third wall 28 is arranged between the second wall 26 and the outlet 23, with an upper end 52 of the third wall 28 coupled to the upper end of the container 22 and a lower end 54 of the third wall 28 arranged above and adjacent to the surface level of the capture solution 20. The walls 24, 26, 28 also extend from a forward end of the container 22 to a rearward end of the container 22. In the illustrative embodiment, forward edges 56, 58, 59 (FIG. 3) of the walls 24, 26, 28, respectively, are coupled to the forward end of the container 22, and opposite rearward edges (not shown) are coupled to the rearward end of the container 22. The walls 24, 26, 28 divide the container 22 into three areas 51, 53, 55 (FIG. 4).

The lower end 44 of the first wall 24 and the upper end 48 of the second wall 26 together define a tortuous path for flow of the air stream through the capture solution 20 for scrubbing particulates from the air stream. In the illustrative embodiment, as better seen in FIG. 5, the lower end 44 of the first wall 24 is arranged at an angle θ toward the second wall 26 relative to a main portion of the first wall 24 (arranged substantially vertical in FIG. 5). In some embodiments, the angle θ is about 80 degrees, and the angle θ can be within a range of about 70 degrees to about 85 degrees inclusive of all angles within this range (such as about 70, 72.5, 75, 77.5, 80, 82.5, or 85). In some embodiments, the surface level of the capture solution 20 is maintained at a level at or above the lower end 44 of the first wall 24 (e.g., at or above a distal end of the lower end 44, at or above a point along the lower end 44, at or above a transition point where the lower end 44 starts to angle relative to the main portion of the first wall 24, etc.). In some embodiments, the surface level of the capture solution 20 is maintained at a level based on a signal from a pressure sensor arranged at the port 29. In some embodiments, the pressure sensor reading is in a range of about 10 inches of water to about 20 inches of water, such as about 15 inches of water. The upper end 48 of the second wall 26 includes a plurality of sections 41, 43, 45 extending around the lower end 44 of the first wall 24. The first section 41 is arranged at an angle α away from the first wall 24 relative to a main portion of the second wall 26 (arranged substantially vertical in FIG. 5). In some embodiments, the angle α is about 70 degrees, and the angle α can be within a range of about 65 degrees to about 75 degrees inclusive of all angles within this range (such as about 65, 67.5, 70, 72.5, or 75). The second section 43 is arranged at an angle β upward relative to the first section 41. In some embodiments, the angle β is about 60 degrees, and the angle β can be within a range of about 55 degrees to about 70 degrees inclusive of all angles within this range (such as about 55, 57.5, 60, 62.5, 65, 67.5, or 70). The third section 45 is arranged at an angle γ toward the first wall 24 relative to the second section 43. In some embodiments, the angle γ is about 45 degrees, or the angle γ may be within a range of about 35 to about 50 degrees inclusive of all angles within this range (such as about 35. 37.5, 40, 42.5, 45, 47.5 or 50 degrees). One of ordinary skill in the art with a thorough review and understanding of this specification would be able to optimize the relative position of the components described in this paragraph including the shapes, sizes, and relative angles of orientation within the ranges disclosed herein with merely routine optimization.

The arrows 80 in FIG. 4 illustrate a representative flow path for the air stream through the container 22. Due to the negative pressure in the container 22 (e.g., in the third area 55) formed by the air mover 14, the air stream enters through the inlet 21 into the first area 51 and passes below the surface of the capture solution 20 and through the tortuous path between the lower end 44 of the first wall 24 and upper end 48 of the second wall 26. Forcing the air stream through the capture solution 20 allows particulate matter in the air stream to transfer to the capture solution 20 (sometimes referred to as scrubbing the air) such that the stream of air passing through the outlet 23 is substantially free of particulate matter. The scrubbed air stream passes through the area 53 to control splashing of the capture solution 20 and minimize an amount of vapor from the capture solution 20 traveling with the air stream. The air stream passes from the second area 53 through the third area 55 to the outlet 23 for discharge by the air mover 14. In some embodiments, a baffle 70 is arranged in the third area 55 toward the outlet 23 to promote condensation of residual vapors in the air stream to further minimize an amount of vapor from the capture solution 20 traveling with the air stream. In the illustrative embodiment, as shown in FIG. 3, the baffle 70 is coupled to the third wall 28 along one edge and to the container 22 along an opposite edge, and a forward edge of the baffle 70 is coupled the forward end of the container 22 while a rear edge (not shown) is spaced apart from the container 22 to force the air stream to travel along the baffle 70 and through the space between the rear edge of the baffle 70 and the container 22 to promote condensation.

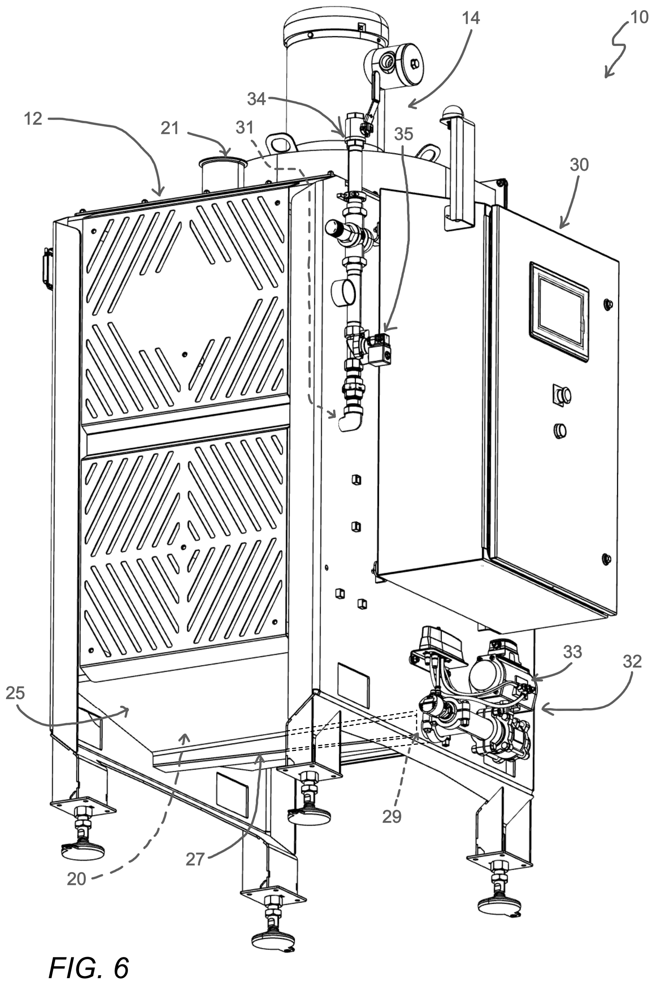

In the illustrative embodiment, the lower end of the container 22 is formed to define a trough 25 as shown in FIG. 4. Captured particulate matter 90 in the capture solution 20 collects along the trough and is directed to a channel 27 for periodic discharge through a port 29 by the waste discharge device 32. One or more openings 47 (see also FIG. 3) in the second wall 26 allow captured particulate matter 90 to pass through the second wall 26 toward the channel 27. In some embodiments, the capture solution 20 is water. In some embodiments, the capture solution 20 contains a flocculant to promote agglomeration and sedimentation of the captured particulate matter 90 scrubbed from the air stream passing through the system 10. As shown in FIG. 6, a controllable valve 33 of the waste discharge device 32 is coupled to the port 29 and a discharge line (not shown) and configured to open and close in response to signals from the controller 30. In some embodiments, a pump is used in addition or alternative to the valve 33. In some embodiments, the waste discharge device 32 is also used to control entry of a sterilization solution to the container 22 for cleaning of the housing 12. A port 31 arranged in the first area 51 allows entry of capture solution 20 by the solution inlet device 34 for maintaining the surface level of the capture solution 20 in the container 22. A controllable valve 35 of the solution inlet device 34 is coupled to a supply line (not shown) and the port 31 and configured to open and close in response to signals from the controller 30.

The term "about" is specifically defined herein to include a range that includes the reference value and plus or minus 5% of the reference value. The term "substantially the same" is when the item under comparison is within 5% of the aspect of the reference value of the item. The term "substantially" is when the referenced value or referenced aspect is within 5% of the reference value. For example, if the referenced item is an angle, something is substantially or about at that angle if it is within plus or minus 5% of the angle. The term "substantially" referenced with respect to a state (e.g. a path being substantially blocked) means that referenced state is blocked but may allow for di minimus flow therepast. The term "substantially" is when the term under comparison is not the exact same item (such as shape or length) as mentioned but with only di minimus changes from the referenced item as those di minimus changes would be appreciated by one or ordinary skill in the art, such as changes that do not significantly affect the structure or function of the item. Items described with reference to other items may be in direct contact or with direct support for each other, or may be with indirect contact or indirect support for each other. "Support" may be direct support (i.e. one item is directly supported by another other item - typically with contact therebetween) as well as indirect support (i.e. one item supports another item due to an intervening member that is typically on contact with both items and the supporting force is transferred through the intervening member).

The computing elements or functions disclosed herein (such as the controller 30) may include a processor and a memory storing computer-readable instructions executable by the processor. In some embodiments, the processor is a hardware processor configured to perform a predefined set of basic operations in response to receiving a corresponding basic instruction selected from a predefined native instruction set of codes. Each of the modules defined herein may include a corresponding set of machine codes selected from the native instruction set, and which may be stored in the memory. Embodiments can be implemented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, optical disc, memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described embodiments can also be stored on the machine-readable medium. Software running from the machine- readable medium can interface with circuitry to perform the described tasks. Moreover, embodiments may be implemented on application specific integrated circuits (ASICs) or very large scale integrated (VLSI) circuits. In fact, persons of ordinary skill in the art may utilize any number of suitable structures capable of executing logical operations according to the embodiments.

Naturally, in view of the teachings and disclosures herein, persons having ordinary skill in the art may appreciate that alternate designs and/or embodiments of the invention may be possible (e.g., with substitution of one or more components for others, with alternate configurations of components, etc.). Although some of the components, relations, configurations, and/or steps according to the invention are not specifically referenced and/or depicted in association with one another, they may be used, and/or adapted for use, in association therewith. All of the aforementioned and various other structures, configurations, relationships, utilities, any which may be depicted and/or based hereon, and the like may be, but are not necessarily, incorporated into and/or achieved by the invention. Any one or more of the aforementioned and/or depicted structures, configurations, relationships, utilities and the like may be implemented in and/or by the invention, on their own, and/or without reference, regard or likewise implementation of any of the other aforementioned structures, configurations, relationships, utilities and the like, in various permutations and combinations, as will be readily apparent to those skilled in the art, without departing from the pith, marrow, and spirit of the disclosed invention

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification can be readily understood with reference to the following Numbered Paragraphs:
Numbered Paragraph 1: A system to remove particulates from an air stream, comprising:
   a housing containing a capture solution; and
   an air mover coupled to the housing,
   wherein the air mover is configured to pull an air stream through the housing, and wherein the housing is configured to direct an incoming portion of the air stream below a surface level of the capture solution for transfer of particulates in the air stream to the capture solution and to direct a scrubbed portion of the air stream substantially free of particulates out of the capture solution for discharge from the housing.
Numbered Paragraph 2: The system of Numbered Paragraph 1, wherein the housing includes a container and a plurality of walls extending across an interior of the container from a forward end of the container to a rearward end of the container, wherein the air mover is coupled to an outlet of the container and configured to pull the air stream through an inlet of the container to the outlet and to discharge the air stream received though the outlet, and wherein the plurality of walls are arranged between an inlet of the container and an outlet of the container and configured to direct the air stream through the capture solution.
Numbered Paragraph 3: The system of Numbered Paragraph 2, wherein the plurality of walls includes a first wall and a second wall, wherein an upper end of the first wall is coupled to an upper end of the container adjacent to the inlet and a lower end of the first wall extends below the surface level of the capture solution, wherein the second wall is arranged between the first wall and the outlet, wherein a lower end of the second wall is coupled to a lower end of the container and an upper end of the second wall extends above the surface level of the capture solution, and wherein the lower end of the first wall and the upper end of the second wall together define a tortuous path for flow of the air stream through the capture solution.
Numbered Paragraph 4: The system of Numbered Paragraph 3, wherein the lower end of the first wall is angled toward the second wall, wherein the upper end of the second wall includes a plurality of sections extending around the lower end of the first wall, wherein the plurality of sections includes a first section, a second section, and a third section, and wherein the first section is angled away from the first wall, the second section is angled upward relative to the first section, and the third section is angled toward the first wall relative to the second section.
Numbered Paragraph 5: The system of Numbered Paragraph 4, wherein the lower end of the first wall is arranged at an angle of about 80 degrees relative to a substantially vertical portion of the first wall, wherein the first section of the upper end of the second wall is arranged at an angle of about 70 degrees relative to a substantially vertical portion of the second wall, wherein the second section is arranged at an angle of about 60 degrees relative to the first section, and wherein the third section is arranged at an angle of about 45 degrees relative to the second section.
Numbered Paragraph 6: The system of any of Numbered Paragraphs 3-5, wherein the plurality of walls further includes a third wall arranged between the second wall and the outlet, and wherein upper end of the third wall is coupled to the upper end of the container and a lower end of the third wall is arranged above and adjacent to the surface level of the capture solution.
Numbered Paragraph 7: The system of Numbered Paragraph 6, wherein the plurality of walls define first, second, and third areas within the container, wherein the air stream flows through the inlet into the first area between the first wall and the container, through the capture solution and tortuous path to the second area between the first wall and the third wall, from the second area to the third area between the third wall and the container, and toward the outlet.
Numbered Paragraph 8: The system of Numbered Paragraph 7, further comprising a baffle arranged in the third area and configured to promote condensation of residual vapor from the capture solution in the air stream.
Numbered Paragraph 9: The system of any of Numbered Paragraphs 2-8, wherein the lower end of the container defines a trough configured to direct particulates retained in the capture solution toward a channel, and wherein the channel is configured to direct the particulates retained in the capture solution toward a port for discharge from the container.
Numbered Paragraph 10: The system of Numbered Paragraph 9, wherein one or more openings in the second wall are configured to allow particulates retained in the capture solution to pass through the second wall toward the channel.
Numbered Paragraph 11: The system of Numbered Paragraph 9 or 10, further comprising a controller, a waste discharge device, and a solution inlet device, wherein the port is a first port, wherein the waste discharge device is coupled to the first port, wherein the solution inlet device is coupled to a second port in the container, wherein the controller is configured to periodically operate the waste discharge device to discharge particulates retained in the capture solution from the container, and wherein the controller is further configured to periodically operate the solution inlet device to pass capture solution into the container in order to maintain the surface level of the capture solution.
Numbered Paragraph 12: The system of any of Numbered Paragraphs 3-11, wherein the system is configured to maintain the surface level of the capture solution at a level at or above a distal end of the lower end of the first wall.
Numbered Paragraph 13: The system of any of Numbered Paragraphs 3-11, wherein the system is configured to maintain the surface level of the capture solution at a level at or above a point along the lower end of the first wall.
Numbered Paragraph 14: The system of any of Numbered Paragraphs 3-11, wherein the system is configured to maintain the surface level of the capture solution at a level at or above a transition point where the lower end starts to angle relative to a main portion of the first wall.
Numbered Paragraph 15: The system of any of Numbered Paragraphs 1-14, further comprising a waste discharge device configured to discharge particulates retained in the capture solution from the housing.
Numbered Paragraph 16: The system of Numbered Paragraph 15, wherein the waste discharge device is coupled to the port.
Numbered Paragraph 17: The system of Numbered Paragraph 15, further comprising a controller configured to periodically operate the waste discharge device to discharge particulates retained in the capture solution from the housing.
Numbered Paragraph 18: The system of any of Numbered Paragraphs 1-14, further comprising a solution inlet device configured to pass capture solution into the housing.
Numbered Paragraph 19: The system of Numbered Paragraph 18, further comprising a controller configured to periodically operate the solution inlet device to pass capture solution into the housing in order to maintain the surface level of the capture solution.
Numbered Paragraph 20: The system of any of the previous Numbered Paragraphs, wherein the inlet is coupled to a food preparation apparatus for collecting particulate matter dispersed during a food preparation process in the food preparation apparatus.
Numbered Paragraph 21: The system of Numbered Paragraph 20, wherein the food preparation apparatus is a food breading apparatus configured to apply breading to items of food.
Numbered Paragraph 22. A system to remove particulates from an air stream, comprising:
   a housing containing a capture solution; and
   an air mover coupled to the housing,
   wherein the air mover is configured to pull an air stream through the housing, and wherein the housing is configured to direct an incoming portion of the air stream below a surface level of the capture solution for transfer of particulates in the air stream to the capture solution and to direct a scrubbed portion of the air stream substantially free of particulates out of the capture solution for discharge from the housing.
Numbered Paragraph 23. The system of Numbered Paragraph 22, wherein the housing includes a container and a plurality of walls extending across an interior of the container from a forward end of the container to a rearward end of the container, wherein the air mover is coupled to an outlet of the container and configured to pull the air stream through an inlet of the container to the outlet and to discharge the air stream received though the outlet, and wherein the plurality of walls are arranged between an inlet of the container and an outlet of the container and configured to direct the air stream through the capture solution.
Numbered Paragraph 24. The system of Numbered Paragraph 23, wherein the plurality of walls includes a first wall and a second wall, wherein an upper end of the first wall is coupled to an upper end of the container adjacent to the inlet and a lower end of the first wall extends below the surface level of the capture solution, wherein the second wall is arranged between the first wall and the outlet, wherein a lower end of the second wall is coupled to a lower end of the container and an upper end of the second wall extends above the surface level of the capture solution, and wherein the lower end of the first wall and the upper end of the second wall together define a tortuous path for flow of the air stream through the capture solution.
Numbered Paragraph 25. The system of Numbered Paragraph 24, wherein the lower end of the first wall is angled toward the second wall, wherein the upper end of the second wall includes a plurality of sections extending around the lower end of the first wall, wherein the plurality of sections includes a first section, a second section, and a third section, and wherein the first section is angled away from the first wall, the second section is angled upward relative to the first section, and the third section is angled toward the first wall relative to the second section.
Numbered Paragraph 26. The system of Numbered Paragraph 25, wherein the lower end of the first wall is arranged at an angle of about 80 degrees relative to a substantially vertical portion of the first wall, wherein the first section of the upper end of the second wall is arranged at an angle of about 70 degrees relative to a substantially vertical portion of the second wall, wherein the second section is arranged at an angle of about 60 degrees relative to the first section, and wherein the third section is arranged at an angle of about 45 degrees relative to the second section.
Numbered Paragraph 27. The system of Numbered Paragraph 243, wherein the plurality of walls further includes a third wall arranged between the second wall and the outlet, and wherein upper end of the third wall is coupled to the upper end of the container and a lower end of the third wall is arranged above and adjacent to the surface level of the capture solution.
Numbered Paragraph 28. The system of Numbered Paragraph 27, wherein the plurality of walls define first, second, and third areas within the container, wherein the air stream flows through the inlet into the first area between the first wall and the container, through the capture solution and tortuous path to the second area between the first wall and the third wall, from the second area to the third area between the third wall and the container, and toward the outlet.
Numbered Paragraph 29. The system of Numbered Paragraph 28, further comprising a baffle arranged in the third area and configured to promote condensation of residual vapor from the capture solution in the air stream.
Numbered Paragraph 30. The system of Numbered Paragraph 24, wherein the lower end of the container defines a trough configured to direct particulates retained in the capture solution toward a channel, and wherein the channel is configured to direct the particulates retained in the capture solution toward a port for discharge from the container.
Numbered Paragraph 31. The system of Numbered Paragraph 30, wherein one or more openings in the second wall are configured to allow particulates retained in the capture solution to pass through the second wall toward the channel.
Numbered Paragraph 32. The system of Numbered Paragraph 30, further comprising a controller, a waste discharge device, and a solution inlet device, wherein the port is a first port, wherein the waste discharge device is coupled to the first port, wherein the solution inlet device is coupled to a second port in the container, wherein the controller is configured to periodically operate the waste discharge device to discharge particulates retained in the capture solution from the container, and wherein the controller is further configured to periodically operate the solution inlet device to pass capture solution into the container in order to maintain the surface level of the capture solution.
Numbered Paragraph 33. The system of Numbered Paragraph 23, wherein the inlet is coupled to a food preparation apparatus for collecting particulate matter dispersed during a food preparation process in the food preparation apparatus.
Numbered Paragraph 34. The system of Numbered Paragraph 33, wherein the food preparation apparatus is a food breading apparatus configured to apply breading to items of food.

## Claims

1. A system to remove particulates from an air stream, comprising:
a housing containing a capture solution; and
an air mover coupled to the housing,
wherein the air mover is configured to pull an air stream through the housing, and wherein the housing is configured to direct an incoming portion of the air stream below a surface level of the capture solution for transfer of particulates in the air stream to the capture solution and to direct a scrubbed portion of the air stream substantially free of particulates out of the capture solution for discharge from the housing.

2. The system of claim 1, wherein the housing includes a container and a plurality of walls extending across an interior of the container from a forward end of the container to a rearward end of the container, wherein the air mover is coupled to an outlet of the container and configured to pull the air stream through an inlet of the container to the outlet and to discharge the air stream received though the outlet, and wherein the plurality of walls are arranged between an inlet of the container and an outlet of the container and configured to direct the air stream through the capture solution.

3. The system of claim 2, wherein the plurality of walls includes a first wall and a second wall, wherein an upper end of the first wall is coupled to an upper end of the container adjacent to the inlet and a lower end of the first wall extends below the surface level of the capture solution, wherein the second wall is arranged between the first wall and the outlet, wherein a lower end of the second wall is coupled to a lower end of the container and an upper end of the second wall extends above the surface level of the capture solution, and wherein the lower end of the first wall and the upper end of the second wall together define a tortuous path for flow of the air stream through the capture solution.

4. The system of claim 3, wherein the lower end of the first wall is angled toward the second wall, wherein the upper end of the second wall includes a plurality of sections extending around the lower end of the first wall, wherein the plurality of sections includes a first section, a second section, and a third section, and wherein the first section is angled away from the first wall, the second section is angled upward relative to the first section, and the third section is angled toward the first wall relative to the second section.

5. The system of claim 4, wherein the lower end of the first wall is arranged at an angle of about 80 degrees relative to a substantially vertical portion of the first wall, wherein the first section of the upper end of the second wall is arranged at an angle of about 70 degrees relative to a substantially vertical portion of the second wall, wherein the second section is arranged at an angle of about 60 degrees relative to the first section, and wherein the third section is arranged at an angle of about 45 degrees relative to the second section.

6. The system of any of claims 3-5, wherein the plurality of walls further includes a third wall arranged between the second wall and the outlet, and wherein upper end of the third wall is coupled to the upper end of the container and a lower end of the third wall is arranged above and adjacent to the surface level of the capture solution.

7. The system of claim 6, wherein the plurality of walls define first, second, and third areas within the container, wherein the air stream flows through the inlet into the first area between the first wall and the container, through the capture solution and tortuous path to the second area between the first wall and the third wall, from the second area to the third area between the third wall and the container, and toward the outlet.

8. The system of claim 7, further comprising a baffle arranged in the third area and configured to promote condensation of residual vapor from the capture solution in the air stream.

9. The system of any of claims 2-8, wherein the lower end of the container defines a trough configured to direct particulates retained in the capture solution toward a channel, and wherein the channel is configured to direct the particulates retained in the capture solution toward a port for discharge from the container.

10. The system of claim 9, wherein one or more openings in the second wall are configured to allow particulates retained in the capture solution to pass through the second wall toward the channel.

11. The system of claim 9 or 10, further comprising a controller, a waste discharge device, and a solution inlet device, wherein the port is a first port, wherein the waste discharge device is coupled to the first port, wherein the solution inlet device is coupled to a second port in the container, wherein the controller is configured to periodically operate the waste discharge device to discharge particulates retained in the capture solution from the container, and wherein the controller is further configured to periodically operate the solution inlet device to pass capture solution into the container in order to maintain the surface level of the capture solution.

12. The system of any of claims 3-11, wherein the system is configured to maintain the surface level of the capture solution at a level at or above a distal end of the lower end of the first wall.

13. The system of any of claims 3-11, wherein the system is configured to maintain the surface level of the capture solution at a level at or above a point along the lower end of the first wall.

14. The system of any of claims 3-11, wherein the system is configured to maintain the surface level of the capture solution at a level at or above a transition point where the lower end starts to angle relative to a main portion of the first wall.

15. The system of any of claims 1-14, further comprising a waste discharge device configured to discharge particulates retained in the capture solution from the housing,
wherein the waste discharge device is coupled to the port,
further comprising a controller configured to periodically operate the waste discharge device to discharge particulates retained in the capture solution from the housing, and
a solution inlet device configured to pass capture solution into the housing.
